# EUROPEAN PATENT SPECIFICATION

(11) **EP 3 012 037 B1**
(45) Date of publication and mention of the grant of the patent: **18.10.2017**
(21) Application number: 15154445.9
(22) Date of filing: 10.02.2015
(51) Int. Cl.: B09B 3/00, C10J 3/00, C10B 57/10, C10B 1/10, F23G 5/20, F23G 5/027, C10B 53/00

(54) **PRODUCTION LINE AND METHOD FOR RECYCLING OF CHARCOAL AND GAS FROM GARBAGE**
FERTIGUNGSSTRASSE UND VERFAHREN ZUR WIEDERVERWERTUNG VON HOLZKOHLE UND GAS AUS MÜLL
CHAÎNE DE PRODUCTION ET PROCÉDÉ DE RECYCLAGE DE CHARBON DE BOIS ET DE GAZ À PARTIR DE DÉCHETS

(30) Priority: 23.10.2014 CN 201410571477
(43) Date of publication of application: 27.04.2016
(73) Proprietor: Jiangmen Wangde Clean Energy Co., Ltd., Xinhui District Jiangmen Guangdong 529000 (CN); Au, Chungyee Irene, Hong Kong 810005 (CN)
(72) Inventor: Yu, Xiaoru, Foshan Guangdong 528000 (CN)
(74) Representative: Hryszkiewicz, Danuta

(56) References cited:
- WO-A1-2006/104298
- CN-A- 103 449 701
- JP-A- 2000 265 186
- JP-A- 2005 344 099
- JP-A- 2008 248 161

## Description

The invention relates to a method and a production line for comprehensively managing garbage, and more particularly to a method and production line for recycling of a charcoal and a gas from garbage.

Currently, a mature method for treating domestic garbage adopts direct combustion using an incinerator and segment running of a mechanical grate. The method includes: drying, pre-combustion, high temperature combustion, evaporation, power generation/industrial gas generation, and discharging the exhaust gas from a chimney after ceramic filters and mist settling. Approximately 10 wt. % of the ashes is recycled. The combustion method requires expensive investment, the construction period thereof is long, and peculiar smells and harmful gases such as dioxins produced in the combustion are discharged.

Waste landfill is still the primary mode for treating the garbage. However, the landfill region is locally polluted, and air pollution, water pollution, and soil pollution produced in the fermentation process further result in secondary pollution of the landfill. Such waste treatment method has cheap investment in construction and can be put into use when a recess terrain is formed and the discharged sewage satisfies an effective radius of the filtration sands. However, with the increase in the land price and the amount of the garbage and the continuous pollution, the landfill region in the city hardly meets the requirement of the treatment of the domestic garbage.

The domestic garbage carbonization pysrolysis furnace is a new type of device for treating the garbage which adopts a magnetic core assembly and an electromagnetic wave to produce atomic fluctuation of anions so as to produce heat energy to reach a temperature of between 1200 and 1300°C at the central part and a temperature of between 200 and 300°C at the periphery of the central part. The organic waste matters after water removal is treated by carbonization and do not necessitate additional fuels. However, the furnace is restricted by the treating capacity thereof, and smoke is produced in the carbonization process, thus, the furnace is not applicable for the comprehensive management of the large scale industrialization.

For example, WO 2006104298 A1 discloses a drying and carbonizing system for treating organic waste matter. The system includes a drying furnace, a carbonizing furnace, and a combustion furnace. The drying furnace includes a connection pipe, the carbonizing furnace includes a discharge pipe, and the combustion furnace includes a primary combustion chamber and a secondary combustion chamber. The primary combustion chamber is connected to the discharge pipe, and the secondary combustion chamber is connected to the connection pipe.

In addition, JP 2008248161 A discloses a thermal decomposition system for thermally decomposing and carbonizing sludge. The system includes a drying machine, a combustion furnace, and a thermal decomposition and carbonization furnace. The drying machine is connected to an exhaust pipe, and the exhaust pipe is connected to the combustion furnace.

It is one objective of the invention to provide a method for recycling of a charcoal and a gas from garbage and a production line for applying the same. The method and the production line are adapted to continuously process the garbage, reduce emission of a smoke and the gas, and avoid a secondary pollution of the garbage.

Technical solution of the invention is as follows:

A production line for recycling of a charcoal and a gas from garbage, the production line comprises: a drying system, a carbonization system, a flammable gas purification system, and a jet burning system. The drying system comprises a drying machine. The drying machine comprises an input end comprising a material inlet and an output end comprising a material outlet. The material outlet is connected to a carbonization rotary cylinder via a spiral transporting pipe. A flammable gas produced in carbonization is used in high temperature combustion of an exhaust gas produced in pyrolysis carbonization process and garbage drying process. Meanwhile, a hot blast produced in the combustion of the flammable gas is recycled and serves as a heat source for drying the garbage. The exhaust gas produced in the garbage drying process is burnt by blasting the flammable gas at a temperature of >800°C whereby evaporating and decomposing a smoke and a peculiar smell.

By adopting the above technical solution, the garbage is dehydrated, dispersed, crushed, and introduced to the drying machine. A dried material is transported to the carbonization rotary cylinder where the dried material is phyrolyzed and carbonized in the absence of oxygen at a constant temperature. A produced flammable gas is then purified. A majority of the flammable gas is returned to a burning chamber of the carbonization rotary cylinder to participate in the combustion of the carbonization and pyrolysis process. A small part of the flammable gas is fed to the combustion of the jet burning system, and meanwhile a sewage produced in the crush and dehydration process and the exhaust gas produced in the drying process are introduced to the jet burning system, so that the high temperature combustion occurs, the smoke is quickly evaporated and the peculiar smell is decomposed. The hot blast produced in the combustion of the flammable gas is returned to the drying machine via the hot blast pipes and is used as the heat source of the garbage drying.

In the method for recycling of the charcoal and the gas from the garbage of the invention, the carbonization rotary cylinder operates at the constant temperature in the absence of oxygen. The carbonization rotary cylinder is characterized in uniform heating, controllable temperature, air insulation, continuous pyrolysis and carbonization for releasing flammable gas, gas recycling, and zero emission, thus, it is beneficial for constructing a large scale and standard production line for comprehensively managing the garbage.

The production line of the invention has a small occupied area. Through the high temperature pyrolysis, inorganic chemical components are completely released from the produced charcoal, and the product does not contain any sulfur, dioxins, or heavy metals, thereby being applicable for environmentally friendly industrial fuel. In operation of the production process, the process flow is reasonable and efficient, and zero emission is realized, which completely reaches the emission standard of the municipal solid waste or industrial waste of China and the EU.

Other features and advantages of the invention will be illustrated hereinbelow in the description, and will be obvious in the following description or be known in embodiments of the invention. The purpose and other advantages of the invention can be realized and obtained by particular structures in the description, claim, and drawings.

The invention is described hereinbelow with reference to the accompanying drawings, in which:
FIG. 1 is a flow chart of a method for recycling of a charcoal and a gas from garbage;
FIG. 2 is a schematic diagram of a production lien for recycling of a charcoal and a gas from garbage;
FIG. 3 is a diagram showing planar arrangement of burning nozzles in a burning chamber; and
FIG. 4 is a left view of burning nozzles.

Specific mode for carrying out the invention is detailed hereinbelow combining with accompany drawings and embodiments to fully understand how to adopt the technical means to solve the technical problem and achieve the technical effect whereby carrying out the invention.

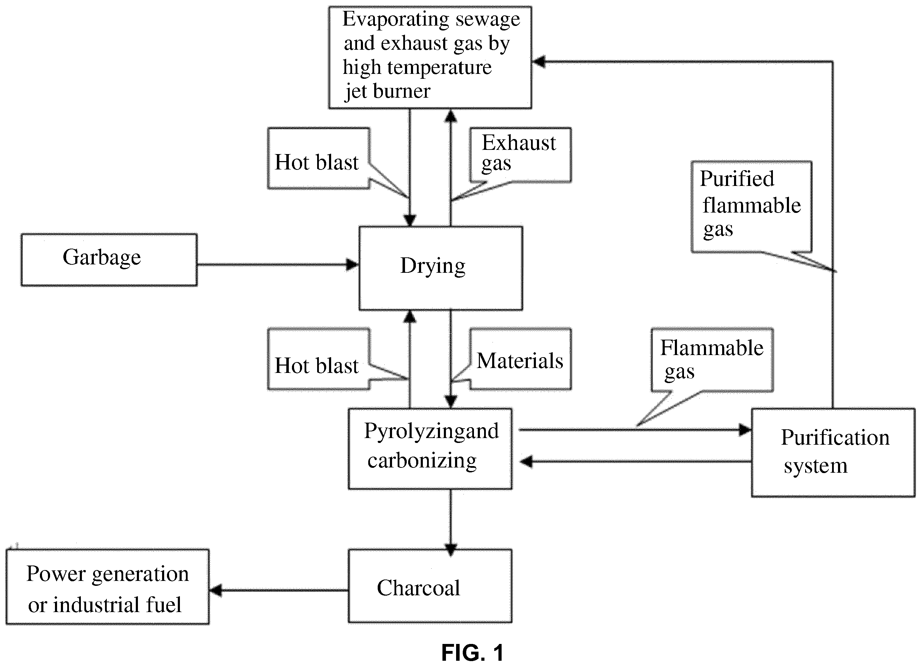

FIG. 1 is a flow chart of a method for recycling of a charcoal and a gas from garbage. The treatment of the garbage for producing the gas and the charcoal mainly comprises: garbage drying, pyrolysis and carbonization, gas recycling, and treatment of an exhaust gas.

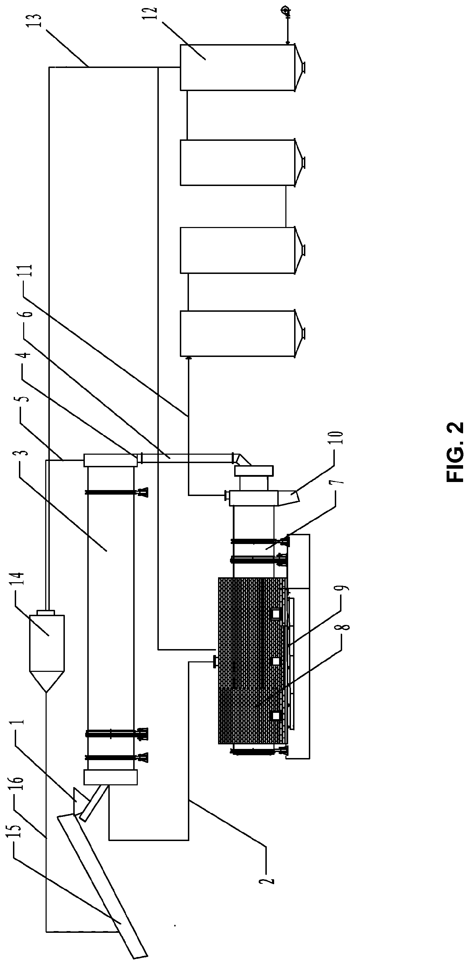

As shown in FIG. 2, a production line for recycling of a charcoal and a gas comprises: a drying system, a carbonization system, a flammable gas purification system, and a jet burning system. The drying system comprises garbage transporting pipe 15 and a drying machine 3. An input end of the drying machine 3 comprises a spiral material inlet 1 for feeding the garbage and a first hot blast pipe 2. A bottom part of an output end of the drying machine 3 is provided with a material outlet 4 for discharging a dried material. A top part of the output end of the drying machine 3 is connected to a jet burning system 14 via an exhaust pipe 5. The dried material is transported from the material outlet 4 to a carbonization rotary cylinder 7 of the carbonization system via a sealed spiral transporting pipe 6. The carbonization rotary cylinder 7 is in a double-cylinder structure. The material is re-dried at a high temperature and is pre-pyrolyzed and pre-carbonized in an inner cylinder. When the material is transported to an outer cylinder, burning nozzles 9 in the burning chamber 8 are combusted, and a flammable gas released from the pyrolysis and carbonization is introduced to a flammable gas purification system 12 via a flammable gas recovery pipe 11. The flammable gas after purification passes through a flammable gas transporting pipe 13. 70 v. % of the flammable gas is returned to a plurality of the burning nozzles arranged in two rows in the burning chamber 8 of the carbonization rotary cylinder 7 for combustion and heating the carbonization rotary cylinder 7, so that the materials therein are continuously pyrolyzed and carbonized. A hot blast produced in the combustion is introduced to the drying machine 3 via a first hot blast pipe 2 of the burning chamber in order to dry the garbage. 30 v. % of the flammable gas is transported to the jet burning system 14 for high temperature combustion, so that a smoke and a peculiar smell from the exhaust gas 5 is evaporated and decomposed. A produced hot blast is introduced to the garbage transporting pipe 15 via a second hot blast pipe 16 for preheating and drying the garbage.

The drying machine 3 comprises a high temperature section, a constant temperature section, and a low temperature section. An inlet of the high temperature section is also the spiral material inlet 1 and an inlet of the first hot blast pipe 2. A plurality of rows of movable clapperboards is disposed in the high temperature section to beat a wet material remaining in a bottom part during rotation of the cylinder body. The material is introduced to the constant temperature section after being dried to a water content of 25 wt. %. Movable clapperboards and movable chains are disposed in the constant temperature section, so that the materials disposed in the bottom part are clapped, and a cylinder wall is struck by the chains for preventing the materials from sticking the materials and for dispersing masses. Both the high temperature section and the constant temperature section are provided with shoveling member functioning in dispersing, beating, clapping, and cleaning, so that a retention time of the materials in the high temperature section is prolonged. The low temperature section is provided with a diversion shovelling plate having an arc angle thereby avoiding tangling of garbage materials. The materials are shoveled and dried to a water content of between 15 and 18 w. %. The materials are rolled over to enter the material outlet 4 and are introduced to the carbonization rotary cylinder 7 via the spiral transporting pipe 6. The dried exhaust gas is transported to the jet burning system 14 via the exhaust pipe 5 thereby being evaporated and decomposed during the high temperature jet burning.

The carbonization rotary cylinder 7 comprises the inner cylinder and the outer cylinder and operates in the absence of oxygen at the high temperature. Both the inner cylinder and the outer cylinder are provided with diversion shovelling plates having arc angles for preventing tangling of the garbage materials. The materials enter the inner cylinder where the materials are re-dried and pre-pyrolyzed at the temperature of > 500°C. When the materials have a water content of < 8% and a temperature of 500°C, the materials is introduced to the outer cylinder. The two rows of the burning nozzles 9 in the burning chamber 8 continuously burn and heat the carbonization rotary cylinder 7, so that the cylinder body is evenly heated to a temperature of >700°C and the pyrolysis and carbonization is quickly and effectively carried out. The produced flammable gas is introduced to the flammable gas purification system 12 for purification via the flammable gas recovery pipe 11. The flammable gas after purification is transported to the burning nozzles 9 of the burning chamber 8 via the flammable gas transporting pipe 13 and is burnt to heat the carbonization rotary cylinder 7. The carbonization rotary cylinder 7 controllably rotates, so that the carbonization rotary cylinder 7 is evenly heated, and the cylinder body is prevented from deformation or cracking due to continuously burning of a fixed position thereon. A rotational speed of the carbonization rotary cylinder 7 is controlled and regulated by the temperature. When the outer cylinder has a temperature of ≥800°C, the charcoal at the charcoal outlet 10 is completely carbonized, and thus, the rotational speed can be increased. Meanwhile, the exhaust gas is evaporated and decomposed in combustion of the burning machine of the jet burning system 14 connected to the flammable gas transporting pipe 13. The jet burning system can adopt a refractory combustion furnace made of a refractory material. A plurality of burning nozzles 9 is arranged for simultaneously burning the flammable gas, so that the temperature in the furnace is controlled at >800°C, and the exhaust gas entering the furnace is quickly evaporated and decomposed and the smoke and the peculiar smell are removed. The hot blast produced in the combustion of the flammable gas is introduced to the drying system via the hot blast pipes and is used as the heat source for drying.

The operation of the production line of the invention is controlled by programmable logic controller (PLC) automation. The material inlet of the drying machine 3 is provided with a water sensor. The burning chamber 8, the first hot blast pipe 2, the flammable gas recovery pipe 11, the flammable gas transporting pipe 13, the jet burning system 14, and the second hot blast pipe 16 are provided with temperature sensors, and temperature signals are sent to a control system. When the temperatures of different units satisfy the preset operating temperatures, the production line starts automatic operation.

At initial start of the carbonization rotary cylinder 7, external fuels are necessitated to combust and heat the carbonization rotary cylinder 7. When the carbonization rotary cylinder 7 is heated to a required temperature, the above production procedure is started to pyrolyze and carbonize the garbage. The flammable gas produced in the pyrolysis and carbonization is recycled and purified. A part of the flammable gas is burnt at the burning nozzles 9 of the burning chamber 8 of the carbonization rotary cylinder 7, and a small amount of the flammable gas is burnt in the jet burning system 14. The hot blast produced in the combustion of the flammable gas is recycled and used as the heat source of the drying machine and is recycled. The garbage charcoal has a calorific value of between 3900 and 4100 Kcal/Kg, a carbon content of ≥ 40 wt. %, and a water content of between 6 and 7 wt. %. An ash is determined by the raw material of the garbage, and contents of sulfides, chlorides, and heavy metals satisfy a carbon standard. The garbage charcoal is supplied to industry and commerce and power generation fuels.

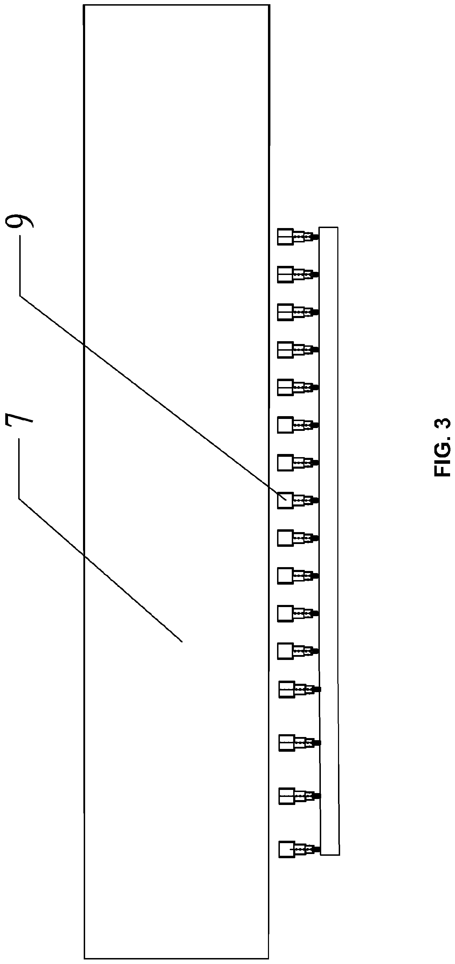

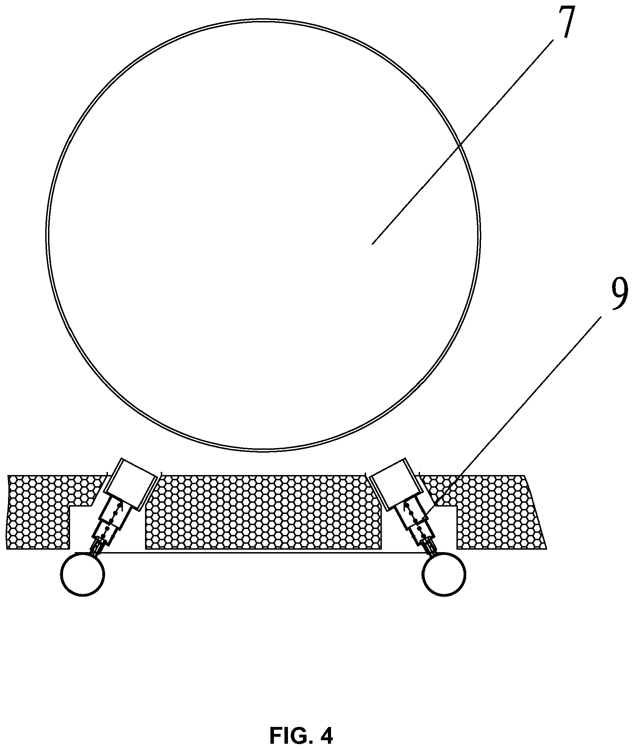

As shown in FIGS. 3-4, the carbonization rotary cylinder 7 adopts external heating mode. Two rows of burning nozzles 9 are arranged. The cylinder body is uniformly heated during the combustion. The dried material is sealing transported to the inner cylinder of the carbonization rotary cylinder 7 where the dried material is re-dried and pre-pyrilized and pre-carbonized. A small amount of vapor is evaporated and is decomposed into oxygen at a temperature of ≥450°C. The oxygen is combined with the hot flammable gas released in the pyrolysis and carbonization, therefore the heat value of the flammable gas is increased. The matters entering the outer cylinder from the inner cylinder has a water content of < 8 wt. % and a temperature of >450°C. An inner side of the cylinder is in an anoxic state in the absence air supply, and the materials therein do not contact with a naked flame. With the rotary operation of the cylinder, the cylinder is uniformly heated, so that the pyrolysis and carbonization of the materials are stably and effectively carried out, and the flammable gas is released during the carbonization process.

The flammable gas released from the pyrolysis carbonization contains a volatile component, a chemical gas component, a peculiar smell, and possibly produced dioxins and furans mixing in the flammable gas during the carbonization. When the flammable gas is introduced to the burning nozzles 9 of the burning chamber 8 of the carbonization rotary cylinder 7 and is burnt at the temperature of >1100°C, dioxins, furans, various inorganic chemical contents, the volatile component, and the peculiar smell are completely combusted, thereby being decomposed and removed.

The high temperature jet burning system 14 of this embodiment is adapted to decompose and evaporate the smoke and the peculiar smell produced in the garbage drying process. During the process of >800°C high temperature burning, the smoke and the water are evaporated instantaneously, the peculiar smell is completely decomposed, leaving a small amount of incombustible ashes.

In the above two processes of combustion of the flammable gas, harmful chemical component, the smoke, and the peculiar smell in the flammable gas or the exhaust gas are decomposed and removed at the high temperature. An emission from the operation of the production line completely meets the emission standard of municipal solid waste or industrial waste of China and the EU.

The production line for treating the garbage of the invention occupies a small area. Taken a production line adapted to treat the garbage having a water content of ≥50% at a treating efficiency of between 6 and 11 ton/hr as an example, the production line comprises the drying system, the jet burning system for treating the exhaust gas, the pyrolysis and carbonization system, and the flammable gas purification system occupies an area of between 1100 and 1200 m². Additional fuels are not necessitated during the stable operation process except a small amount of the electric power, so that the production cost is very low. The device has a broad treating range, and garbage except metals, soil or stones, and glasses can be treated.

The production line and the method for recycling of the charcoal and the gas from the garbage can be widely applied in comprehensive management of the municipal solid waste as well as carbonization treatment of the industrial garbage.

It should be noted that in order to simplify the description, the above method embodiments are illustrated by a series of action combinations, however, persons skilled in the art should understand that the invention is not limited by the action sequence described in the context because that some actions can be performed in other sequence or simultaneously performed; besides, persons skilled in the art should also understand that the embodiments described in the description belongs to preferable embodiments, and the related actions and modules may not be necessitated by the invention.

## Claims

1. A production line for recycling of a charcoal and a gas from garbage, the production line comprising: a drying system, a carbonization system, a flammable gas purification system, and a jet burning system; wherein:
the drying system comprises a drying machine (3); the drying machine (3) comprises an input end comprising a material inlet (1) and an output end comprising a material outlet (4); the output end of the drying machine (3) is connected to an exhaust pipe (5), and the exhaust pipe (5) is connected to the jet burning system (14); and
the carbonization system comprises a carbonization rotary cylinder (7); a bottom part of the carbonization rotary cylinder (7) comprises a charcoal outlet (10); an upper part of the carbonization rotary cylinder is connected to a flammable gas purification system (12) via a flammable gas recovery pipe (11);
**characterized in that**
the material outlet (4) is connected to the carbonization rotary cylinder (7) via a spiral transporting pipe (6); and
an end of the flammable gas purification system (12) is connected to a flammable gas transporting pipe (13); the flammable gas transporting pipe (13) comprises two branches; one of the two branches is connected to burning nozzles (9) arranged beneath the carbonization rotary cylinder (7), and the other of the two branches is connected to the jet burning system (14).

2. The production line of claim 1, **characterized in that** a burning chamber (8) is disposed at a periphery of the carbonization rotary cylinder (7); the burning nozzles (9) are disposed at a bottom part of the burning chamber (8); an upper part of the burning chamber (8) is connected to a first hot blast pipe (2); and the first hot blast pipe (2) is connected to the input end of the drying machine (3).

3. The production line of claim 1, **characterized in that** the drying system further comprises a garbage transporting pipe (15); the garbage transporting pipe (15) is disposed in front of the input end of the drying machine (3); and an output end of the jet burning system (14) is connected to the garbage transporting pipe (15) via a second hot blast pipe (16).

4. The production line of claim 1, **characterized in that** the drying machine (3) and the carbonization rotary cylinder (7) are arranged horizontally in parallel; or the dying machine (3) is disposed above the carbonization rotary cylinder (7) supported by a steal frame.

5. The production line of claim 1, **characterized in that** the burning nozzles (9) are arranged in two rows; and the two rows of the burning nozzles (9) are arranged in parallel.

6. The production line of claim 1, **characterized in that** the jet burning system (14) is a high temperature jet burner or a refractory furnace.

7. A method for co-generation of a charcoal and a gas from garbage based on the production line of any one of claims 1-6, the method comprising the following steps:
1) garbage drying: dehydrating, dispersing, and crushing the garbage, and drying the garbage whereby producing a dried material;
2) pyrolysis and carbonization: continuously pyrolyzing and carbonizing the dried material in the absence of oxygen at a constant temperature whereby producing a flammable gas and a garbage charcoal; recycling the garbage charcoal; and supplying the garbage charcoal for power generation or as an industrial fuel;
3) gas recycling: recycling the flammable gas produced in the pyrolysis and carbonization, burning an exhaust gas produced in the pyrolysis and carbonization process and the garbage drying process using the flammable gas, recycling a hot blast from combustion of the flammable gas and the supplying the hot blast as a heat source to dry the garbage; and
4) exhaust gas treatment: burning the flammable gas at a temperature of ≥1100°C whereby decomposing and removing dioxins, furans, and other inorganic chemical components mixed therein; and jet burning the exhaust gas at a temperature of >800°C whereby evaporating and decomposing a smoke and a peculiar smell produced in the garbage drying.

## Patentansprüche

1. Fertigungsstraße für das Recycling von Holzkohle und Gas aus Müll, wobei die Fertigungsstraße umfasst: ein Trocknungssystem, ein Karbonisierungssystem, ein Reinigungssystem für brennbares Gas und ein Strahlbrennsystem;
worin:
das Trocknungssystem eine Trocknungsmaschine (3) umfasst; die Trocknungsmaschine (3) ein Eingangsende mit einem Materialeinlass (1) und ein Ausgangsende mit einem Materialauslass (4) aufweist; wobei das Austrittsende der Trocknungsmaschine (3) mit einem Abgasrohr (5) verbunden ist und das Abgasrohr (5) mit dem Strahlbrennsystem (14) verbunden ist; und
das Karbonisierungssystem einen Karbonisierungsdrehzylinder (7) aufweist; wobei ein unterer Teil des Karbonisierungsdrehzylinders (7) einen Holzkohlenauslass (10) aufweist; wobei ein oberer Teil des Karbonisierungsdrehzylinders mit einem brennbaren Gasreinigungssystem (12) über ein brennbares Gasrückgewinnungsrohr (11) verbunden ist;
**dadurch gekennzeichnet, dass**
der Materialauslass (4) über ein Spiral-Transportrohr (6) mit dem Karbonisierungsdrehzylinder (7) verbunden ist; und
ein Ende des brennbaren Gasreinigungssystems (12) mit einem brennbaren Gastransportrohr (13) verbunden ist; wobei das brennbare Gastransportrohr (13) zwei Zweige aufweist; wobei einer der beiden Zweige mit unterhalb des Karbonisierungsdrehzylinders (7) angeordneten Brenndüsen (9) verbunden ist und der andere der beiden Zweige mit dem Strahlbrennsystem (14) verbunden ist.

2. Fertigungsstraße nach Anspruch 1, **dadurch gekennzeichnet, dass** eine Brennkammer (8) an einer Peripherie des Karbonisierungsdrehzylinders (7) angeordnet ist; wobei die Brenndüsen (9) an einem unteren Teil der Brennkammer (8) angeordnet sind; wobei ein oberer Teil der Brennkammer (8) mit einem ersten Heißluftrohr (2) verbunden ist; und wobei das erste Heißluftrohr (2) mit dem Eingangsende der Trocknungsmaschine (3) verbunden ist.

3. Fertigungsstraße nach Anspruch 1, **dadurch gekennzeichnet, dass** das Trocknungssystem ferner ein Mülltransportrohr (15) umfasst; wobei das Mülltransportrohr (15) vor dem Eingangsende der Trocknungsmaschine (3) angeordnet ist; und ein Austrittsende des Strahlbrennsystems (14) über ein zweites Heißluftrohr (16) mit dem Mülltransportrohr (15) verbunden ist.

4. Fertigungsstraße nach Anspruch 1, **dadurch gekennzeichnet, dass** die Trocknungsmaschine (3) und der Karbonisierungsdrehzylinder (7) horizontal parallel angeordnet sind; oder die Trocknungsvorrichtung (3) oberhalb des durch einen Stahlrahmen getragenen Karbonisierungsdrehzylinders (7) angeordnet ist.

5. Fertigungsstraße nach Anspruch 1, **dadurch gekennzeichnet, dass** die brennenden Düsen (9) in zwei Reihen angeordnet sind; und die beiden Reihen der Brenndüsen (9) parallel angeordnet sind.

6. Fertigungsstraße nach Anspruch 1, **dadurch gekennzeichnet, dass** das Strahlbrennsystem (14) ein Hochtemperatur- Strahlbrenner oder ein feuerfester Ofen ist.

7. Verfahren zur Erzeugung von Holzkohle und Gas aus Müll, basierend auf der Fertigungsstraße nach einem der Ansprüche 1 bis 6, wobei das Verfahren die folgenden Schritte umfasst:
1) Mülltrocknung: Entwässern, Dispergieren und Zerkleinern des Mülls und Trocknen des Mülls, wodurch ein getrocknetes Material erzeugt wird;
2) Pyrolyse und Karbonisierung: kontinuierliches Pyrolysieren und Karbonisieren des getrockneten Materials in Abwesenheit von Sauerstoff bei konstanter Temperatur, wodurch ein entflammbares Gas und eine Müllholzkohle erzeugt wird; Recycling der Müllholzkohle; und die Lieferung der Müllkohle zur Stromerzeugung oder als Industriebrennstoff;
3) Gasrecycling: Recycling des bei der Pyrolyse und Karbonisierung erzeugten brennbaren Gases, Verbrennen eines im Pyrolyse- und Karbonisierungsprozess erzeugten Abgases und des Mülltrocknungsprozesses unter Verwendung des brennbaren Gases, Recycling eines Heißwassers aus der Verbrennung des brennbaren Gases und Zuführen des Heißwindes als Wärmequelle, um den Müll zu trocknen; und
4) Abgasbehandlung: Verbrennen des brennbaren Gases bei einer Temperatur von ≥ 1100 °C, wobei Dioxine, Furane und andere anorganische chemische Komponenten, die darin vermischt sind, zersetzt und entfernt werden; und Strahlverbrennen des Abgases bei einer Temperatur von > 800 °C, wobei ein Rauch und eigenartiger Geruch, der bei der Mülltrocknung erzeugt wird, verdampft und zersetzt wird.

## Revendications

1. Ligne de production pour le recyclage d'un charbon et d'un gaz à partir de déchets, la ligne de production comprenant : un système de séchage, un système de carbonisation, un système de purification de gaz inflammable et un système de combustion à jet ;
le système de séchage comprenant une machine de séchage (3) ; la machine de séchage (3) comprenant une extrémité d'entrée comprenant une entrée de matériau (1) et une extrémité de sortie comprenant une sortie de matériau (4) ; l'extrémité de sortie de la machine de séchage (3) étant connectée à un tuyau d'échappement (5), et le tuyau d'échappement (5) étant connecté au système de combustion à jet (14) ; et
le système de carbonisation comprenant un cylindre rotatif de carbonisation (7) ; une partie inférieure du cylindre rotatif de carbonisation (7) comprenant une sortie de charbon (10) ; une partie supérieure du cylindre rotatif de carbonisation étant connectée à un système de purification de gaz inflammable (12) par l'intermédiaire d'un tuyau de récupération de gaz inflammable (11) ;
**caractérisée en ce que**
la sortie de matériau (4) est connectée au cylindre rotatif de carbonisation (7) par l'intermédiaire d'un tuyau de transport en spirale (6) ; et
une extrémité du système de purification de gaz inflammable (12) est connectée à un tuyau de transport de gaz inflammable (13) ; le tuyau de transport de gaz inflammable (13) comprend deux ramifications ; l'une des deux ramifications est connectée à des buses de combustion (9) agencées sous le cylindre rotatif de carbonisation (7) et l'autre des deux ramifications est connectée au système de combustion à jet (14).

2. Ligne de production selon la revendication 1, **caractérisée en ce qu'**une chambre de combustion (8) est disposée au niveau d'une périphérie du cylindre rotatif de carbonisation (7) ; les buses de combustion (9) sont disposées au niveau d'une partie inférieure de la chambre de combustion (8) ; une partie supérieure de la chambre de combustion (8) est connectée à un premier tuyau de vent chaud (2) ; et le premier tuyau d'air chaud (2) est connecté à l'extrémité d'entrée de la machine de séchage (3).

3. Ligne de production selon la revendication 1, **caractérisée en ce que** le système de séchage comprend en outre un tuyau de transport de déchets (15) ; le tuyau de transport de déchets (15) est disposé devant l'extrémité d'entrée de la machine de séchage (3) ; et une extrémité de sortie du système de combustion à jet (14) est connectée au tuyau de transport de déchets (15) par l'intermédiaire d'un second tube d'air chaud (16).

4. Ligne de production selon la revendication 1, **caractérisée en ce que** la machine de séchage (3) et le cylindre rotatif de carbonisation (7) sont disposés horizontalement en parallèle ; ou la machine de séchage (3) est disposée au-dessus du cylindre rotatif de carbonisation (7) supporté par un cadre en acier.

5. Ligne de production selon la revendication 1, **caractérisée en ce que** les buses de combustion (9) sont disposées sur deux rangées ; et les deux rangées des buses de combustion (9) sont disposées en parallèle.

6. Ligne de production selon la revendication 1, **caractérisée en ce que** le système de combustion à jet (14) est un brûleur à jet à haute température ou un four réfractaire.

7. Procédé de co-production d'un charbon et d'un gaz provenant de déchets basé sur la ligne de production selon l'une quelconque des revendications 1 à 6, le procédé comprenant les étapes suivantes :
1) séchage des déchets : déshydratation, dispersion et broyage des déchets, puis séchage des déchets, ce qui permet de produire une matière séchée ;
2) pyrolyse et carbonisation : pyrolyse et carbonisation de manière continue de la matière séchée en l'absence d'oxygène à une température constante, ce qui permet de produire un gaz inflammable et un charbon de déchets ; recyclage du charbon de déchets ; et approvisionnement du charbon de déchets pour la production d'électricité ou en tant que carburant industriel ;
3) recyclage de gaz : recyclage de gaz inflammable produit lors de la pyrolyse et de la carbonisation, combustion d'un gaz d'échappement produit dans le processus de pyrolyse et de carbonisation et le processus de séchage des déchets à l'aide d'un gaz inflammable, recyclage de l'air chaud de la combustion du gaz inflammable et approvisionnement de l'air chaud comme source de chaleur pour sécher les déchets ; et
4) traitement du gaz d'échappement : combustion du gaz inflammable à une température ≥ 1100 °C, ce qui permet la décomposition et l'élimination des dioxines, des furanes et d'autres composants chimiques inorganiques mélangés dans ceux-ci ; et la combustion par jet du gaz d'échappement à une température > 800 °C, ce qui permet l'évaporation et la décomposition d'une fumée et d'une odeur particulière produites lors du séchage des déchets.
